# EUROPEAN PATENT SPECIFICATION

(11) **EP 4 325 465 B1**
(45) Date of publication and mention of the grant of the patent: **29.10.2025**
(21) Application number: 23187416.5
(22) Date of filing: 25.07.2023
(51) Int. Cl.: G08G 5/00, G08G 5/22, G08G 5/55, G08G 5/80

(54) **METHOD AND APPARATUS FOR CONTROLLING OPERATIONS OF FLIGHT VEHICLES**
VERFAHREN UND VORRICHTUNG ZUR STEUERUNG VON FLUGOPERATIONEN VON LUFTFAHRZEUGEN
PROCÉDÉ ET APPAREIL DE COMMANDE D'OPÉRATIONS DE VÉHICULES DE VOL

(30) Priority: 25.07.2022 KR 20220091858
(43) Date of publication of application: 21.02.2024
(73) Proprietor: Pablo Air Co., Ltd., Incheon (KR)
(72) Inventor: Kim, Hyeong Min, INCHEON (KR); Lim, Seung Han, DAEJEON (KR); Kim, Youngjoon, INCHEON (KR); Lee, Seung Yeop, INCHEON (KR); Lee, Hyun Woo, INCHEON (KR)
(74) Representative: Glawe, Delfs, Moll

(56) References cited:
- WO-A1-2021/205730
- WO-A1-2022/067759
- US-A1- 2018 366 012
- US-B1- 11 282 398

## Description

### BACKGROUND

### 1. Technical Field

The present disclosure relates to a method and apparatus for controlling the operations of flight vehicles, and more particularly, to a method and apparatus for controlling the operations of flight vehicles when a potential collision between the flight vehicles is detected.

### 2. Description of the Related Art

A method of controlling the operations of flight vehicles, capable of avoiding a collision between the flight vehicles, is presented. Controllers utilize a control screen with operation information of a plurality of flight vehicles to assess the operational states of the flight vehicles and take appropriate actions to control their operations based on prevailing circumstances.

For example, controllers employ information gathered from sensors installed in each monitored flight vehicle to anticipate and notify the pilots, via communication, about potential collision risks between the monitored flight vehicles to avert collisions among the monitored flight vehicles.

However, if the sensors malfunction or if there is inadequate communication between the controllers and the pilots of the monitored flight vehicles, it becomes challenging to accurately predict and caution against collision risks, thereby impeding effective collision prevention measures between the monitored flight vehicles.

Document US 2018/0366012 A1 describes a method of air traffic control to reduce collisions. Nested 3D volumes of protected space are generated as geometric solids for each of a plurality of aircraft and monitored. Upon detecting that the volumes of protected space associated with multiple aircraft intersect each other, alarm notifications are generated to warn appropriate personnel that the aircraft could come within an unsafe distance of each other.

Document US 11,282,398 B1 relates to an autonomous airspace separation system for monitoring flight separation for compliance with a separation standard. A reference formation airspace is established based on minimum longitudinal, lateral and vertical parameters. When penetration of the reference formation airspace is detected, a penetration airspace is established based on a deformation of the reference formation airspace caused by the penetrating aircraft. A centroid of the penetration airspace is determined and a target separation to the centroid is supplied to the aircraft to reestablish safe separation.

### SUMMARY

Aspects of the present disclosure provide a method and apparatus for controlling the operations of flight vehicles, which enable the display of multiple control screens, where operation information of a plurality of monitored flight vehicles is displayed, and allow a user to easily identify various information related to the operations of the monitored flight vehicles.

Aspects of the present disclosure also provide a method and apparatus for controlling the operations of flight vehicles, which can accurately predict the risk of collisions between the monitored flight vehicles via a plurality of control screens and a collision prediction model that utilizes augmented reality (AR) images.

Aspects of the present disclosure also provide a method and apparatus for controlling the operations of flight vehicles, which can promptly and efficiently notify a controller of any detected collisions between the monitored flight vehicles through a control screen.

Aspects of the present disclosure also provide a method and apparatus for controlling the operations of flight vehicles, which prevent collisions between the monitored flight vehicles by providing a control screen displaying selectable collision avoidance alternatives.

However, aspects of the present disclosure are not restricted to those set forth herein. The above and other aspects of the present disclosure will become more apparent to one of ordinary skill in the art to which the present disclosure pertains by referencing the detailed description of the present disclosure given below. The solution is provided by the features of the independent claims. Variations are as defined by the dependent claims.

### BRIEF DESCRIPTION OF THE DRAWINGS

The above and other aspects and features of the present disclosure will become more apparent by describing in detail exemplary embodiments thereof with reference to the attached drawings, in which:
FIG. 1 is a flowchart illustrating a method of controlling the operations of flight vehicles according to an embodiment of the present disclosure;
FIG. 2 is a detailed flowchart illustrating "S100" of FIG. 1;
FIGS. 3 and 4 illustrate a plurality of control screens displaying operation information of flight vehicles, which can be referenced in some embodiments of the present disclosure;
FIG. 5 illustrates a method of arranging neighboring virtual flight vehicles, which can be referenced in some embodiments of the present disclosure;
FIG. 6 is a detailed flowchart illustrating "S300" of FIG. 1;
FIG. 7 illustrates an exemplary screen displaying neighboring virtual flight vehicles, which can be referenced in some embodiments of the present disclosure;
FIG. 8 illustrates a method of determining a potential collision between flight vehicles, which can be referenced in some embodiments of the present disclosure;
FIG. 9 is a detailed flowchart illustrating "S320" of FIG. 6;
FIG. 10 illustrates some of the processes depicted in FIG. 9;
FIG. 11 is a detailed flowchart illustrating "S322" of FIG. 9;
FIG. 12 illustrates some of the processes depicted in FIG. 11;
FIG. 13 is a detailed flowchart illustrating "S330" of FIG. 6;
FIG. 14 illustrates some of the processes depicted in FIG. 13; and
FIG. 15 is a hardware configuration view of a system for providing flight vehicle operation information in accordance with some embodiments of the present disclosure.

### DETAILED DESCRIPTION

Hereinafter, example embodiments of the present disclosure will be described with reference to the attached drawings. Advantages and features of the present disclosure and methods of accomplishing the same may be understood more readily by reference to the following detailed description of example embodiments and the accompanying drawings. The present disclosure may, however, be embodied in many different forms and should not be construed as being limited to the embodiments set forth herein. Rather, these embodiments are provided so that this disclosure will be thorough and complete and will fully convey the concept of the disclosure to those skilled in the art, and the present disclosure will be defined by the appended claims and their equivalents.

In describing the present disclosure, when it is determined that the detailed description of the related well-known configuration or function may obscure the gist of the present disclosure, the detailed description thereof will be omitted.

In addition, in describing the component of this disclosure, terms, such as first, second, A, B, (a), (b), can be used. These terms are only for distinguishing the components from other components, and the nature or order of the components is not limited by the terms.

Hereinafter, embodiments of the present disclosure are described with reference to the accompanying drawings.

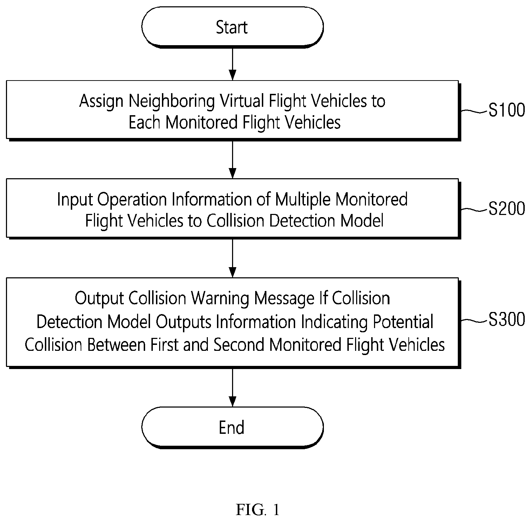

FIG. 1 is a flowchart illustrating a method of controlling the operations of flight vehicles according to an embodiment of the present disclosure. It is noted that the method depicted in FIG. 1 serves as an illustrative example, and it is possible to include additional steps in or remove certain steps from the method of FIG. 1.

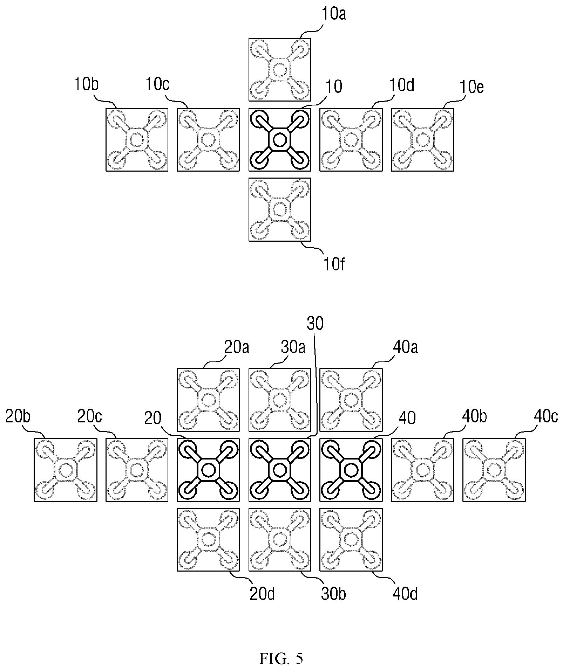

Referring to FIG. 1, in S100, neighboring virtual flight vehicles are assigned to each monitored flight vehicle. A predefined number of neighboring virtual flight vehicles may be arranged in a predefined layout around each monitored flight vehicle, and this will be described later with reference to FIG. 5.

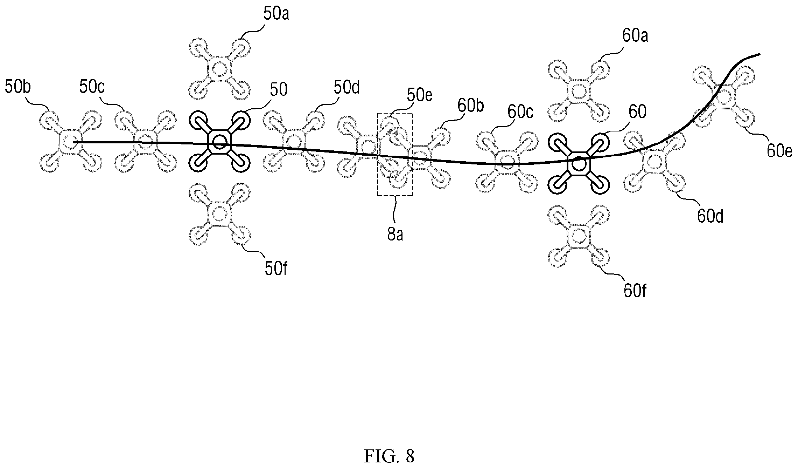

In S200, operation information of a plurality of monitored flight vehicles may be input to a collision detection model. The collision detection model may be a model that determines and outputs the occurrence of collisions between neighboring virtual flight vehicles of each of the monitored flight vehicles based on operation information of the neighboring virtual flight vehicles, which is generated using the operation information of the monitored flight vehicles. The speed and direction of movement of the neighboring virtual flight vehicles may be the same as those of their respective monitored flight vehicles. A method of predicting a potential collision between the monitored flight vehicles via the collision detection model will be described later with reference to FIG. 8.

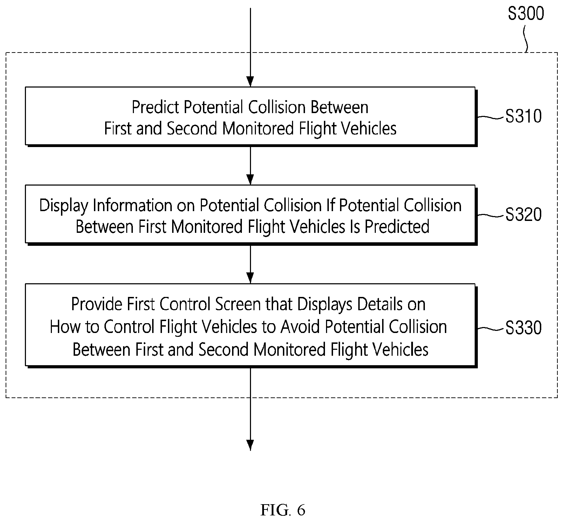

In S300, if the collision detection model outputs information indicating a potential collision between a neighboring virtual flight vehicle of a first monitored flight vehicle and a neighboring virtual flight vehicle of a second monitored flight vehicle, a collision warning message may be output. Specifically, the collision warning message may include context information of the potential collision between the first and second monitored flight vehicles and details on how to control the first and second monitored flight vehicles to avoid the collision. This will be described later with reference to FIGS. 6 through 14.

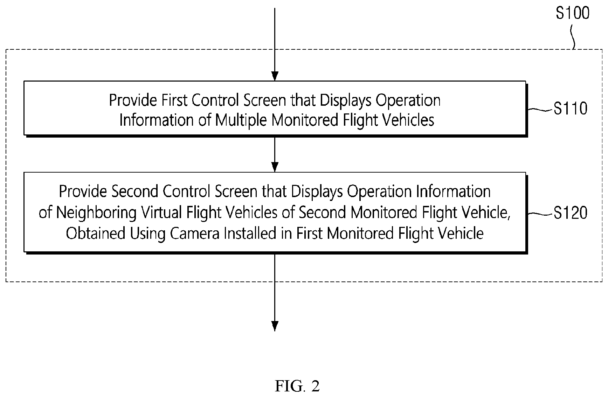

First and second control screens where the operation information of the monitored target vehicles is displayed will hereinafter be described with reference to FIGS. 2 through 4.

FIG. 2 is a detailed flowchart illustrating "S100" of FIG. 1. It is noted that the method depicted in FIG. 1 serves as an illustrative example, and it is possible to include additional steps in or remove certain steps from S100 of FIG. 1.

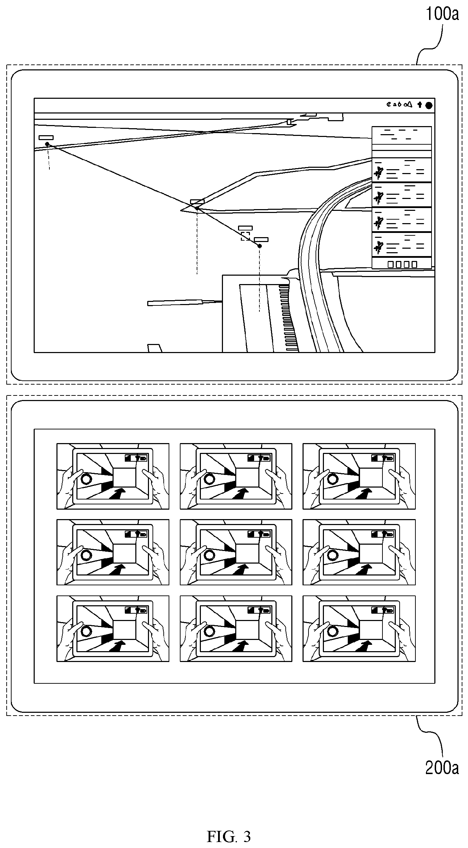

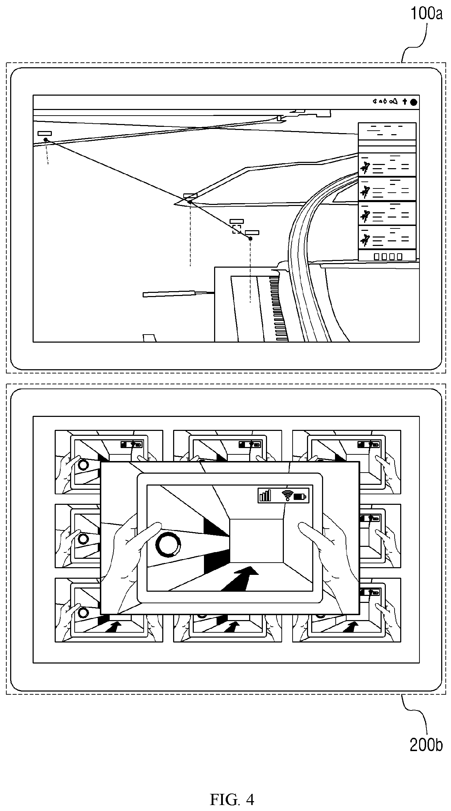

Referring to FIG. 2, S100, which is the step of assigning neighboring virtual flight vehicles to each of the first and second monitored flight vehicles, may include the following sub-steps: S110, which involves providing a first control screen that displays the operation information of the first monitored flight vehicles; and S120, which provides a second control screen that displays operation information of neighboring virtual flight vehicles of the second monitored flight vehicle, which is obtained using a camera installed in the first monitored flight vehicle. S110 and S120 will hereinafter be described with reference to FIGS. 3 and 4.

FIGS. 3 and 4 illustrate a plurality of control screens displaying operation information of flight vehicles, which can be referenced in some embodiments of the present disclosure.

Multiple control screens that can be provided before the detection of a potential collision between the monitored flight vehicles will hereinafter be described with reference to FIG. 3.

Referring to FIG. 3, a first control screen 100a where the operation information of the monitored flight vehicles is displayed may be provided. The operation information of the monitored flight vehicles, displayed on the first control screen 100a, may include route information from the departures to the destinations of the monitored flight vehicles, real-time speed information of the monitored flight vehicles, and real-time surrounding geographical information of the locations of the monitored flight vehicles are currently situated. When a potential collision between the monitored flight vehicles is detected, a first control screen with collision information may be provided.

A second control screen 200a, which displays operation information of neighboring virtual flight vehicles of the second monitored flight vehicle, obtained using the camera installed in the first monitored flight vehicle, may be provided together with the first control screen 100a. Specifically, augmented reality (AR) images captured using the cameras installed in the monitored flight vehicles may be presented on the second control screen 200a. AR technologies are widely recognized in the field to which the present disclosure pertains, and therefore, detailed descriptions thereof will be omitted.

Multiple control screens that can be provided after the detection of a potential collision between the monitored flight vehicles will hereinafter be described with reference to FIG. 4.

Referring to FIG. 4, when a potential collision between the monitored flight vehicles is detected by the collision detection model, a second control screen 200B displaying an enlarged image of an AR image captured using the camera installed in one of the monitored flight vehicles involved in the detected potential collision may be provided. Here, the AR image may be an image captured by the camera installed in one of first and second monitored flight vehicles that are involved in the detected potential collision. The AR image may have a playback time that corresponds to a predefined length and may be updated at intervals of a predetermined amount of time.

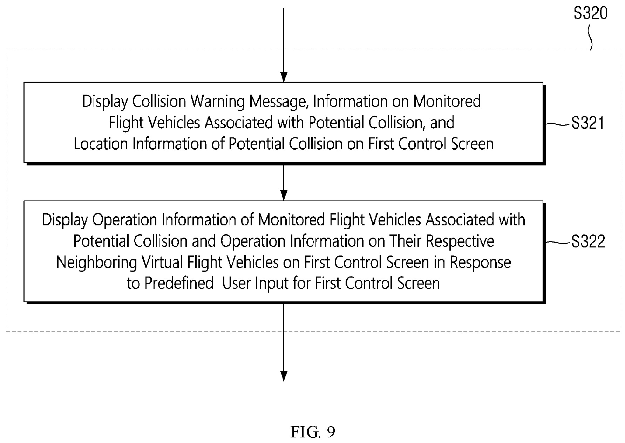

A first control screen that can be provided after the detection of a potential collision will be described later with reference to FIGS. 9 through 14. FIGS. 3 and 4 illustrate that the first and second control screens 100a and 200a (or 200b) are arranged side-by-side vertically. However, alternatively, the first and second control screens 100a and 200a (or 200b) may be arranged side-by-side horizontally.

A user or controller can recognize the operating statuses of the monitored flight vehicles based on the operation information presented on a single control screen, and can control the monitored flight vehicles individually depending on the circumstances. However, this method has limitations, especially when there is a large number of monitored flight vehicles.

According to the embodiment of FIGS. 3 and 4, as the first control screen that displays real-time operation information of the monitored flight vehicles and the second control screen that displays operation information of neighboring virtual flight vehicles assigned to each of the monitored flight vehicles are both provided, the user can easily recognize the operating statuses of the monitored flight vehicles. Furthermore, as an image of a simulated collision between the neighboring virtual flight vehicles is presented on the second control screen, the visual effect of a warning against potential collisions between the monitored flight vehicles can be maximized. As a result, efficient control of the monitored flight vehicles' operations can be achieved by facilitating the identification of their operation information, ensuring safety by preventing potential collisions.

A first computing device (not illustrated) that outputs the first and second control screens 100a and 200a may transmit the operation information of the monitored flight vehicles to the collision detection model.

The collision detection model may predict potential collisions between the monitored flight vehicles based on the operation information of the neighboring virtual flight vehicles, presented on the second control screen 200a. If a potential collision between the monitored flight vehicles is predicted, an enlarged image of an AR image captured from one of the monitored flight vehicles that are involved in the potential collision may be presented on the second control screen 200b.

Also, the collision detection model may transmit information on the predicted potential collision to the first computing device, and the first computing device may output an updated first control screen 100b or 100c and an updated second control screen 200b that presents the information on the predicted potential collision. This will be described later with reference to FIGS. 8 through 13.

A computing device that outputs the second control screen 200a or 200b may be a second computing device (not illustrated), which differs from the first computing device. In the following description, the first computing device is assumed to be responsible for outputting the first control screen 100a, 100b, or 100c and the second control screen 200a or 200b is the first computing device.

In summary, a conventional method of predicting and issuing warnings for potential collisions between multiple monitored flight vehicles, based solely on operation information for a current time point, faces spatial limitations when attempting to efficiently display various related information, such as operation information, potential collision information, and collision warning messages, on a single control screen. However, by providing the user with both the first control screen that displays the operation information of the multiple monitored flight vehicles and the second control screen that displays the operation information of the neighboring virtual flight vehicles of each of the multiple monitored flight vehicles, it becomes possible to efficiently present various flight operation information.

A method of displaying virtual flight vehicles around each monitored flight vehicle will hereinafter be described with reference to FIG. 5.

FIG. 5 illustrates a method of arranging neighboring virtual flight vehicles, which can be referenced in some embodiments of the present disclosure.

Referring to FIG. 5, neighboring virtual flight vehicles 10a through 10f may be displayed around a monitored flight vehicle 10. The neighboring virtual flight vehicles 10a through 10f may have the same shape and specifications as the monitored flight vehicle 10. Specifically, two virtual flight vehicles 10d and 10e may be displayed at the front of the monitored flight vehicle 10, two virtual flight vehicles 10b and 10c may be displayed at the rear of the monitored flight vehicle 10, and one virtual flight vehicle 10a or 10f may be displayed on the side of the monitored flight vehicle 10.

According to the embodiment of FIG. 5, virtual flight vehicles may be displayed around each monitored flight vehicle, instead of safety ranges. **In** the event of a predicted potential collision, an image of a simulated collision between the neighboring virtual flight vehicles can be presented, thereby enhancing the visual warning effect and enabling the user to quickly and adaptively respond to the potential collision.

If multiple monitored flight vehicles 20, 30, and 40 are flying in formation, their corresponding neighboring virtual flight vehicles may also be displayed around each monitored flight vehicle. Specifically, virtual flight vehicles 20a through 20c, 30a and 30b, and 40a through 40d may be displayed around the monitored flight vehicles 20, 30, and 40, respectively. If the monitored flight vehicles 20, 30, and 40 share the same shape, the neighboring virtual flight vehicles 20a through 20c, 30a and 30b, and 40a through 40d may also be presented in the same shape. Conversely, if the monitored flight vehicles 20, 30, and 40 have different shapes, at least some of the neighboring virtual flight vehicles 20a through 20c, 30a and 30b, and 40a through 40d may have different shapes as well.

However, the arrangement method of neighboring virtual flight vehicles assigned to the neighboring area of each monitored flight vehicle is not limited to that illustrated in FIG. 5 and can be determined by the user using various other methods. For example, in the case of a flight vehicle carrying hazardous materials sensitive to collisions, safety can be ensured by increasing the number of neighboring virtual flight vehicles assigned to the flight vehicle or changing the pattern of arrangement of the neighboring virtual flight vehicles. Furthermore, when multiple flight vehicles fly in formation, a greater number of neighboring virtual flight vehicles can be placed on the left and right sides of each monitored flight vehicles compared to other sides, thereby enhancing safety.

Meanwhile, monitored flight vehicles involved in a potential collision, along with their respective neighboring virtual flight vehicles, may be differentiated from other monitored flight vehicles or neighboring virtual flight vehicles by being displayed with a distinguishable feature such as a red border, as illustrated in FIG. 5.

FIG. 6 is a detailed flowchart illustrating "S300" of FIG. 1. It is noted that the method depicted in FIG. 1 serves as an illustrative example, and it is possible to include additional steps in or remove certain steps from S300 of FIG. 1.

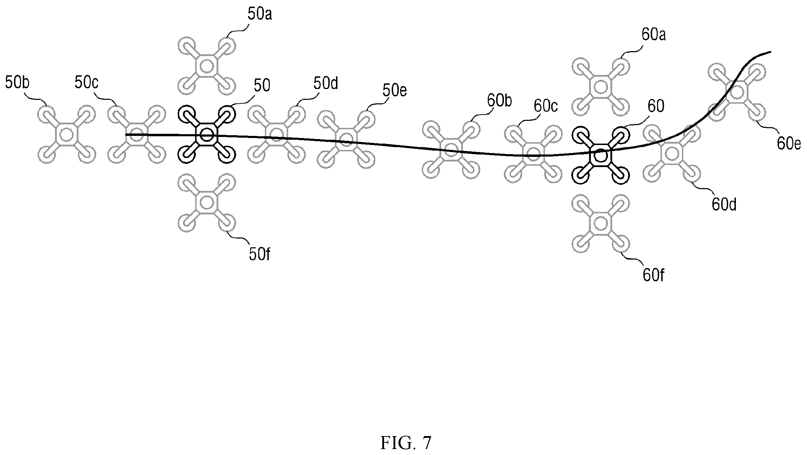

Referring to FIG. 6, S300, which is the step of outputting a collision warning message, may include the following sub-steps: S310, which involves predicting a potential collision between the first and second monitored flight vehicles; S320, which involves displaying context information of the potential collision on the first control screen if the potential collision is predicted; and S330, which involves presenting details on how to control the first and second monitored flight vehicles to avoid the potential collision on the first control screen. The embodiment of FIG. 6 will hereinafter be described with reference to FIGS. 7 through 14.

First, S310 of FIG. 6 will hereinafter be described with reference to FIGS. 7 and 8.

FIG. 7 illustrates an exemplary screen displaying neighboring virtual flight vehicles, which can be referenced in some embodiments of the present disclosure. Specifically, FIG. 7 illustrates an exemplary screen provided prior to a collision occurring between neighboring virtual flight vehicles of the first and second monitored flight vehicles.

Referring to FIG. 7, neighboring virtual flight vehicles 50a through 50f may be displayed around a first monitored flight vehicle 50, and neighboring virtual flight vehicles 60a through 60f may be displayed around a second monitored flight vehicle 60. When an image of the second monitored flight vehicle 60 is captured by a camera installed in the first monitored flight vehicle 50, the neighboring virtual flight vehicles 60a through 60f may be displayed around the second monitored flight vehicle 60. Alternatively, when the distance between the first and second monitored flight vehicles 50 and 60 is less than a reference value, the neighboring virtual flight vehicles 60a through 60f may be displayed around the second monitored flight vehicle 60.

The neighboring virtual flight vehicle 50e may be the closest neighboring virtual flight vehicle to the first monitored flight vehicle 50, and the neighboring virtual flight vehicle 60b may be the closest neighboring virtual flight vehicle to the second monitored flight vehicle 60.

FIG. 8 illustrates a method of determining a potential collision between flight vehicles, which can be referenced in some embodiments of the present disclosure. Specifically, FIG. 8 depicts the situation after a collision has occurred between neighboring virtual flight vehicles, while FIG. 7 represents the situation prior to the collision. As a result, redundant explanations that cover the content already described with reference to FIG. 7 will be omitted.

Referring to FIG. 8, a collision 8a may potentially occur between the neighboring virtual flight vehicle 50e of the first monitored flight vehicle 50 and the neighboring virtual flight vehicle 60b of the second monitored flight vehicle 60. When the collision 8a occurs, the collision detection model may identify a potential risk of a collision between the first and second monitored flight vehicles 50 and 60 colliding with each other. In this case, the first control screen may be presented, displaying context information of the collision 8a and providing guidance on how to control the first and second monitored flight vehicles 50 and 60 to avoid the collision 8a.

That is, if a collision occurs between the neighboring virtual flight vehicles of the monitored flight vehicles, the collision detection model may predict that a collision will occur soon between the monitored flight vehicles.

The first and second monitored flight vehicles 50 and 60, along with the neighboring virtual flight vehicles 50a through 50f and 60a through 60f may be highlighted with a red border and may thus be able to be visually distinguished from other monitored flight vehicles (not illustrated) that are not associated with the predicted potential collision.

To summarize, when a collision between the neighboring virtual flight vehicles of the monitored flight vehicles occurs, a potential collision between the monitored flight vehicles can be predicted, and the visual warning effect can be maximized, thereby preventing the collision. Furthermore, utilizing AR images captured by cameras instead of Light Detection and Ranging (LiDAR) or Radio Detection and Ranging (RaDAR) sensors can enhance both efficiency and cost-effectiveness.

A method of presenting context information of a detected potential collision between the monitored flight vehicles on the first control screen will hereinafter be described with reference to FIGS. 9 through 12. The presentation of the context information of the detected potential collision on the first control screen may be performed by the computing device (not illustrated) that displays the first and second control screens. The first control screen may be the first control screen 100a described above with reference to FIGS. 1 through 8, and the second control screen may be the second control screen 200a or 200b described above with reference to FIGS. 1 through 8. The technical concept of the embodiments of FIGS. 1 through 8 may be directly applicable to the embodiment of FIGS. 9 through 12.

FIG. 9 is a detailed flowchart illustrating "S320" of FIG. 6. Specifically, FIG. 9 is a flowchart illustrating the processes to be performed when the collision detection model detects a potential collision between the monitored flight vehicles.

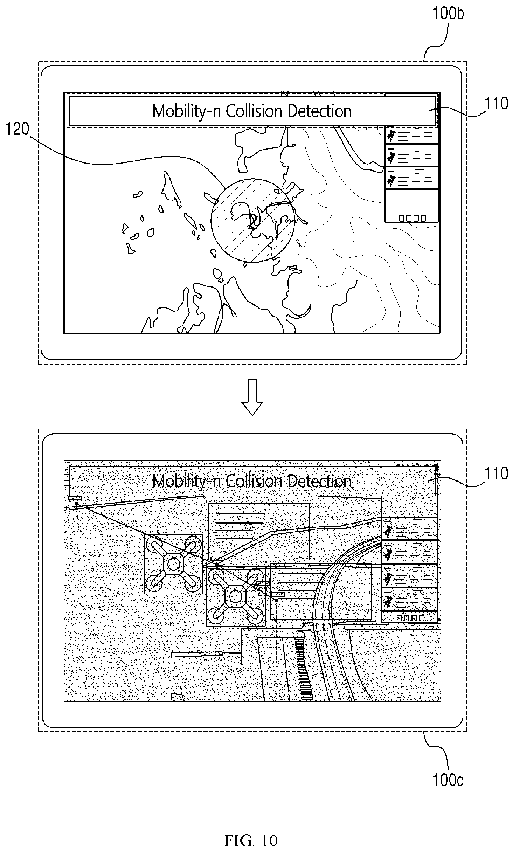

Referring to FIG. 9, S320, which is the step of displaying the context information of the potential collision between the first and second monitored flight vehicles on the first control screen, may include the following sub-steps: S321, which involves presenting information on the monitored flight vehicles associated with the potential collision and location information of the potential collision on the first control screen; and S322, which involves displaying operation information of the monitored flight vehicles associated with the potential collision and operation information of their respective neighboring virtual flight vehicles on the first control screen in response to predefined user input for the first control screen. S320 of FIG. 9 will hereinafter be described in further detail with reference to FIG. 10.

Specifically, it will hereinafter be described how to display a collision warning message and location information on a potential collision between the monitored flight vehicles on the first control screen when the potential collision is detected.

FIG. 10 illustrates some of the processes depicted in FIG. 9.

Referring to FIG. 10, a collision warning message 110 may be displayed on the first control screen 100b, and collision information 120, including location information regarding a detected potential collision and information on monitored flight vehicles involved in the detected potential collision, may also be displayed. The collision warning message 110 may have a red border and a distinctive background color. The collision information 120 may be displayed within a red circle to ensure visual differentiation. Furthermore, the number of monitored flight vehicles associated with the detected potential collision may also be displayed within the red circle.

However, the present disclosure is not limited to the example of FIG. 10. That is, the visual presentation of various information regarding the detected potential collision can take different forms other than the one depicted in FIG. 10 as long as it enables the controller or user to easily and quickly comprehend the detected potential collision.

For example, the collision warning message 110 and the collision information 120 may be displayed to flash in red for a predetermined amount of time.

A method of displaying operation information of monitored flight vehicles associated with a potential collision and operation information of their respective neighboring virtual flight vehicles on the first control screen will hereinafter be described.

Referring again to FIG. 10, in response to predefined user input for the first control screen 100b, operation information of monitored flight vehicles associated with a predicted potential collision and operation information of their respective neighboring virtual flight vehicles may be displayed on the first control screen 100b. Specifically, in response to predefined user input for the first control screen 100b, the location of the predicted potential collision may be visually magnified and displayed, and the monitored flight vehicles associated with the predicted potential collision may be visually highlighted with a red border, and a first control screen 100c that flashes with a red background for a predetermined period of time may be provided. The predefined user input may be a touch input, a mouse click, or a scroll input on the collision information 120, which includes information on the monitored flight vehicles associated with the predicted potential collision and the location information of the predicted potential collision.

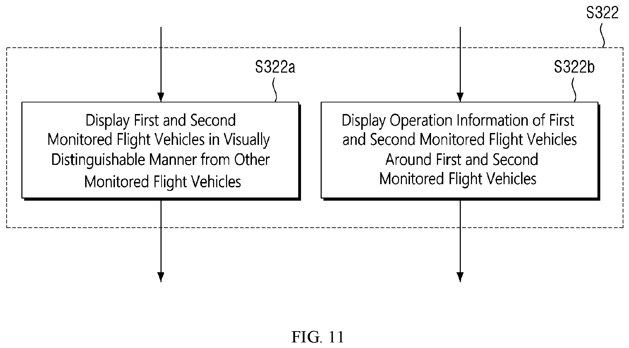

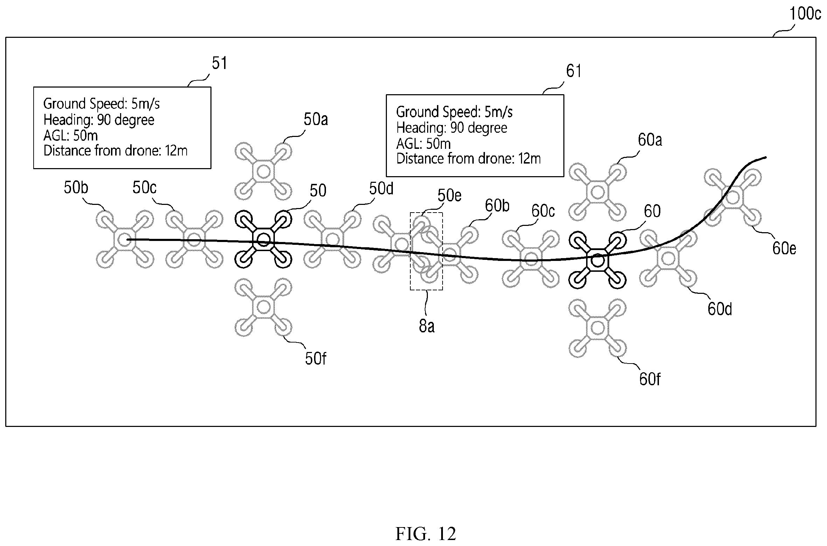

A first control screen displaying operation information of monitored flight vehicles associated with a predicted potential collision and operation information of their respective neighboring virtual flight vehicles will hereinafter be described with reference to FIGS. 11 and 12.

FIG. 11 is a detailed flowchart illustrating "S322" of FIG. 9. It is noted that the method depicted in FIG. 1 serves as an illustrative example, and it is possible to include additional steps in or remove certain steps from S322 of FIG. 11.

Referring to FIG. 11, S322, which is the step of displaying operation information of the monitored flight vehicles associated with a potential collision and the operation information of their respective neighboring virtual flight vehicles on the first control screen in response to predefined user input for the first control screen, may include the following sub-steps: S322a, which involves displaying the first and second monitored flight vehicles in a visually distinguishable manner from the other monitored flight vehicles; and S322b, which involves displaying the operation information of the first and second monitored flight vehicles near the first and second monitored flight vehicles.

FIG. 12 illustrates some of the processes depicted in FIG. 11. Specifically, FIG. 12 illustrates a method of providing a first control screen that displays operation information of monitored flight vehicles associated with a predicted potential collision and operation information of their respective neighboring virtual flight vehicles.

Referring to FIG. 12, the first and second monitored flight vehicles 50 and 60, which are associated with a predicted potential collision, may be displayed in a visually distinguishable manner from the other monitored flight vehicles. For example, the first and second monitored flight vehicles 50 and 60 may be highlighted with a red border.

The neighboring virtual flight vehicles 50a through 50f may be displayed around the first monitored flight vehicle 50, and the neighboring virtual flight vehicles 60a through 60f may be displayed around the second monitored flight vehicle 60. The neighboring virtual flight vehicles 50a through 50f and 60a through 60f may also be displayed in a visually distinguishable manner from a third monitoring flight vehicle (not illustrated), which is not associated with the predicted potential collision, and neighboring virtual flight vehicles (not illustrated) of the third monitoring flight vehicle.

On the first control screen 100c, operation information 51 of the first monitoring flight vehicle 50 may be displayed near the first monitored flight vehicle 50, and operation information 61 of the second monitored flight vehicle 60 may be displayed near the second monitored flight vehicle 60.

The operation information 51 of the first monitored flight vehicle 50 and the operation information 61 of the second monitored flight vehicle 60 may include the ground speeds, headings, and above ground levels (AGLs) of the first and second monitored flight vehicles 50 and 60 and the distance between the first and second monitored flight vehicles 50 and 60.

When a potential collision between multiple monitored flight vehicles is detected, a first control screen can be provided to display information on the detected potential collision in various manners. This enables the user to receive prompt and efficient alerts regarding the detected potential collision, facilitating quick comprehension of the information and enabling the user to take appropriate actions in response to the detected potential collision.

Meanwhile, the user may face difficulty in easily identify potential collisions between multiple monitored flight vehicles across multiple screens. Thus, the collision detection model may promptly issue warnings for potential collisions by employing various methods, including sending vibrations or notifications to the user's smart device (such as a smartwatch or a mobile phone). Here, the user may be a controller or a pilot.

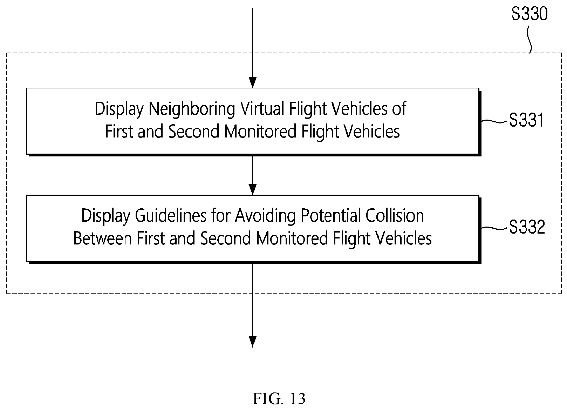

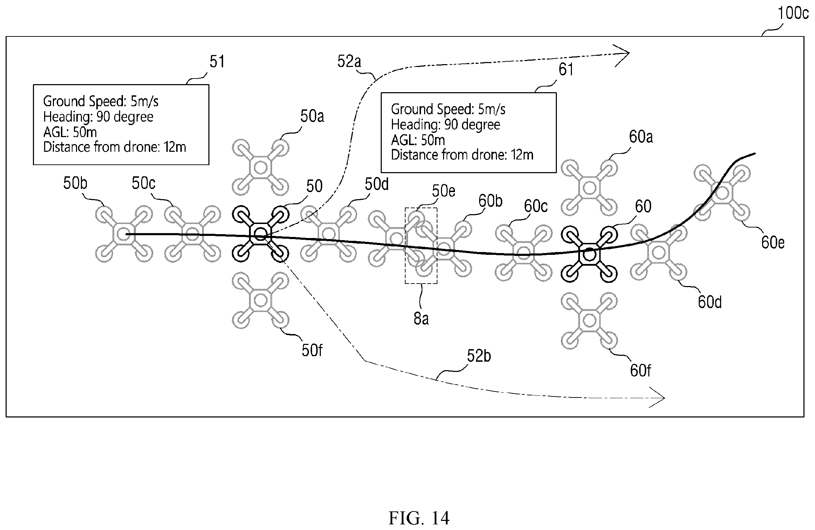

A method of avoiding collisions using operation information of a plurality of monitored flight vehicles according to an embodiment of the present disclosure will hereinafter be described with reference to FIGS. 13 and 14. The method of FIGS. 13 and 14 may be performed by a computing device (not illustrated) that outputs first and second control screens. The first control screen may be the first control screen 100a, 100b, or 100c, and the second control screen may be the second control screen 200a or 200b. The technical concept of the embodiment of FIGS. 1 through 12 may be directly applicable to the embodiment of FIGS. 13 and 14.

FIG. 13 is a detailed flowchart illustrating "S330" of FIG. 6. Specifically, FIG. 14 illustrates a method of providing a first control screen with guidelines for avoiding a detected potential collision between multiple flight vehicles, and it is noted that additional steps may be included in or certain steps may be removed from S330 of FIG. 13.

Referring to FIG. 13, S330, which is the step of displaying details on how to control the first and second monitored flight vehicles to avoid a potential collision, may include the following sub-steps: S331, which involves displaying the neighboring virtual flight vehicles of the first monitored flight vehicle and the neighboring virtual flight vehicles of the second monitored flight vehicle; and S332, which displays guidelines for avoiding the potential collision between the first and second monitored flight vehicles.

FIG. 14 illustrates some of the sub-steps depicted in FIG. 13. Specifically, FIG. 14 illustrates an exemplary first control screen with guidelines for avoiding the detected potential collision between the first and second monitored flight vehicles.

The operation information 51 of the first monitored flight vehicle 50 and the operation information 61 of the second monitored flight vehicle 60 are as described earlier with reference to FIG. 11, and thus, the embodiment of FIG. 14 will hereinafter be described, focusing mainly on guidelines 52a and 52b, which are displayed to avoid the potential collision between the first and second monitored flight vehicles 50 and 60.

Referring to FIG. 14, the first control screen 100c may be provided to display the guidelines 52a and 52b, which are for avoiding the potential collision between the first and second monitored flight vehicles 50 and 60. The guidelines 52a and 52b may be generated based on the operation information 51 of the first monitored flight vehicle 50 and the operation information 61 of the second monitored flight vehicle 60. In response to user input for the guidelines 52a and 52b, the potential collision between the first and second monitored flight vehicles 50 and 60 may be avoided by controlling at least one of the first and second monitored flight vehicles 50 and 60.

If no user input is received for a predefined duration, one of the guidelines 52a and 52b may be automatically selected to prevent the potential collision between the first and second monitored flight vehicles.

Although not specifically depicted in FIG. 14, the first and second monitored flight vehicles 50 and 60, which are associated with a potential collision, and the neighboring virtual flight vehicles 50a through 50f and 60a through 60f may be highlighted with, for example, a red border, as illustrated in FIG. 5, and may thus be able to be visually distinguished from the other monitored flight vehicles.

FIG. 14 illustrates an exemplary first control screen 100c with the guidelines 52a and 52b for controlling the first monitored flight vehicle 50, which is positioned relatively behind the second monitored flight vehicle 60, taking into account the routes of the first and second monitored flight vehicles 50 and 60 to prevent a potential collision between the first and second monitored flight vehicles. However, it is also possible to provide a first control screen 100c with guidelines (not illustrated) for controlling the second monitored flight vehicle 60 to avoid the potential collision between the first and second monitored flight vehicles 50 and 60.

Although the guidelines 52a and 52b for avoiding a collision between the first and second monitored flight vehicles 50 and 60 are presented in a two-dimensional (2D) plane, indicating potential control of either the first or second monitored flight vehicle 50 or 60 in horizontal and vertical directions to evade the collision, it is also feasible to provide a first control screen 100c with guidelines for controlling at least one of the speed, altitude, and heading of the first and second monitored flight vehicles 50 and 60 in a three-dimensional (3D) space for collision avoidance.

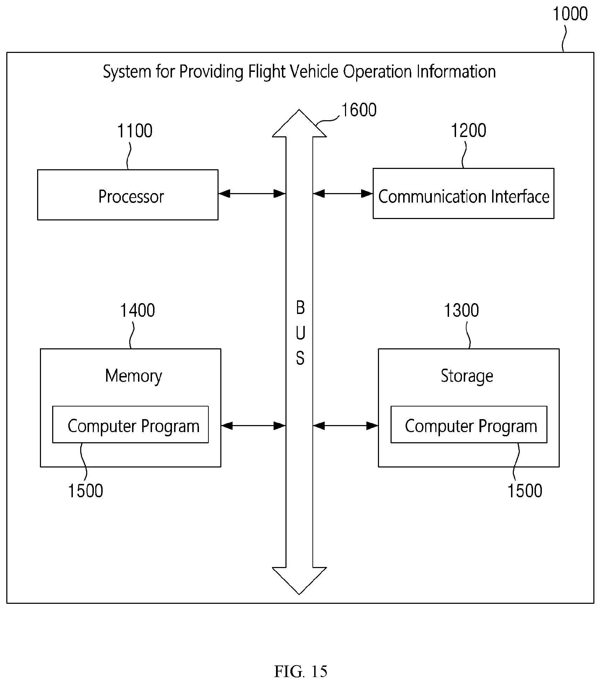

FIG. 15 is a hardware configuration view of a system for controlling the operations of flight vehicles in accordance with some embodiments of the present disclosure. Referring to FIG. 15, a system 1000 for controlling the operations of flight vehicles may include at least one processor 1100, a system bus 1600, a communication interface 1200, a memory 1400, which loads a computer program 1500 to be executed by the processor 1100, and a storage 1300, which stores the computer program 1500.

The processor 1100 controls the overall operation of the system 1000. The processor 1100 may perform computations for at least one application or program to execute methods/operations according to various embodiments of the present disclosure. The memory 1400 stores various data, commands, and/or information. The memory 1400 may load the computer program 1500 from the storage 1300 to execute the methods/operations according to various embodiments of the present disclosure. The system bus 1600 provides communication capabilities among the components of the system 1000. The communication interface 1200 supports Internet communication of the system 1000. The storage 1300 may temporarily store the computer program 1500. The computer program 1500 may include one or more instructions that implement the methods/operations according to various embodiments of the present disclosure. When the computer program 1500 is loaded into the memory 1400, the processor 1100 may perform the methods/operations according to various embodiments of the present disclosure by executing the one or more instructions.

In some embodiments, the system 1000 described with reference to FIG. 15 may be configured using cloud technologies, such as virtual machines, and leveraging one or more physical servers in a server farm. In this case, some of the components depicted in FIG. 15, such as the processor 1100, the memory 1400, and the storage 1300, may be implemented as virtual hardware. Similarly, the communication interface 1200 may be composed of virtualized networking elements, such as a virtual switch.

Embodiments of the present disclosure have been described above with reference to FIGS. 1 through 15, but it should be noted that the effects of the present disclosure are not limited to those described above, and other effects of the present disclosure should be apparent from the following description.

The technical features of the present disclosure described so far may be embodied as computer readable codes on a computer readable medium. The computer program recorded on the computer readable medium may be transmitted to other computing device via a network such as internet and installed in the other computing device, thereby being used in the other computing device.

Although operations are shown in a specific order in the drawings, it should not be understood that desired results can be obtained when the operations must be performed in the specific order or sequential order or when all of the operations must be performed. In certain situations, multitasking and parallel processing may be advantageous. In concluding the detailed description, those skilled in the art will appreciate that many variations and modifications can be made to the example embodiments without substantially departing from the principles of the present disclosure. Therefore, the disclosed example embodiments of the disclosure are used in a generic and descriptive sense only and not for purposes of limitation. The protection scope of the present invention should be interpreted by the following claims.

## Claims

1. A method of controlling the operations of flight vehicles, performed by a computing device, comprising:
assigning to each of monitored flight vehicles (10, 20, 30, 40) virtual flight vehicles to be displayed around monitored flight vehicles as neighboring virtual flight vehicles (10a, 20a, 30a, 40a);
inputting operation information of the monitored flight vehicles (10, 20, 30, 40) to a collision detection model; and
if information indicating that a collision (8a) has occurred between neighboring virtual flight vehicles (50a-50f) of a first monitored flight vehicle (50) and neighboring virtual flight vehicles (60a-60f) of a second monitored flight vehicle (60) is output from the collision detection model, outputting a collision warning message,
wherein the collision detection model is a model that utilizes operation information of the neighboring virtual flight vehicles (10a, 20a, 30a, 40a), which is obtained by applying the operation information of the monitored flight vehicles (10, 20, 30, 40) to their respective neighboring virtual flight vehicles (10a, 20a, 30a, 40a), to determine and output the occurrence of a collision (8a) between the neighboring virtual flight vehicles (50a-50f, 60a-60f) of the first and second monitored flight vehicles (50, 60),
**characterized in that**
the assigning to each of the monitored flight vehicles (10, 20, 30, 40) comprises providing a first control screen (100a) that displays the operation information of the monitored flight vehicles (10, 20, 30, 40) and providing a second control screen (200a) that displays operation information of neighboring virtual flight vehicles (60a-60f) of the second monitored flight vehicle (60),
wherein neighbouring virtual flight vehicles are displayed using Augmented Reality (AR) and whereby an image of the second monitored flight vehicle is obtained and displayed using a camera installed in the first monitored flight vehicle.

2. The method of claim 1, wherein the neighboring virtual flight vehicles (10a, 20a, 30a, 40a) have the same shape and specifications as their respective monitored flight vehicles (10, 20, 30, 40).

3. The method of claim 1, wherein the outputting the collision warning message, comprises predicting a potential collision between the first and second monitored flight vehicles (50, 60), displaying context information of the potential collision on the first control screen (100a) if the potential collision is predicted, and displaying details on how to control the first and second monitored flight vehicles (50, 60) to avoid the potential collision on the first control screen (100a).

4. The method of claim 3, wherein the predicting the potential collision between the first and second monitored flight vehicles (50, 60), comprises predicting that a collision between the first and second monitored flight vehicles (50, 60) will occur when a collision (8a) between one of the neighboring virtual flight vehicles (50a-50f) of the first monitored flight vehicle (50) and one of the neighboring virtual flight vehicles (60a-60f) of the second monitored flight vehicle (60) occurs.

5. The method of claim 3, wherein the displaying the context information of the potential collision on the first control screen (100a), comprises displaying a collision warning message for the potential collision, information of monitored flight vehicles (10, 20, 30, 40) associated with the potential collision, and location information of the potential collision on the first control screen (100a), and displaying operation information of the monitored flight vehicles (10, 20, 30, 40) associated with the potential collision and operation information of their respective neighboring virtual flight vehicles (10a, 20a, 30a, 40a) on the first control screen (100a) in response to predefined user input for the first control screen (100a).

6. The method of claim 5, wherein the displaying the operation of the monitored flight vehicles (10, 20, 30, 40) associated with the potential collision and operation information of their respective neighboring virtual flight vehicles (10a, 20a, 30a, 40a), comprises displaying the first and second monitored flight vehicles (50, 60) in a visually distinguishable manner from the other monitored flight vehicles (10, 20, 30, 40) and displaying operation information of the first monitored flight vehicle (50) and operation of the second monitored flight vehicle (60) around the first and second monitored flight vehicles (50, 60), respectively.

7. The method of claim 3, wherein the displaying the details on how to control the first and second monitored flight vehicles (50, 60), comprises displaying the neighboring virtual flight vehicles (50a-50f) of the first monitored flight vehicle (50) and the neighboring virtual flight vehicles (60a-60f) of the second monitored flight vehicle (60) and displaying guidelines (52a, 52b) for avoiding the potential collision between the first and second monitored flight vehicles (50, 60).

8. The method of claim 7, wherein the displaying the guidelines (52a, 52b) for avoiding the potential collision between the first and second monitored flight vehicles (50, 60), comprises displaying guidelines (52a, 52b) for deviating the first monitored flight vehicle (50) from a predefined flight path of the first monitored flight vehicle (50).

9. The method of claim 7, wherein the displaying the guidelines (52a, 52b) for avoiding the potential collision between the first and second monitored flight vehicles (50, 60), comprises displaying guidelines (52a, 52b) for deviating the second monitored flight vehicle (60) from a predefined flight path of the second monitored flight vehicle (60).

10. The method of claim 7, wherein the displaying the guidelines (52a, 52b) for avoiding the potential collision between the first and second monitored flight vehicles (50, 60), further comprises avoiding the potential collision between the first and second monitored flight vehicles (50, 60) by automatically selecting one of the guidelines (52a, 52b) if no user input is received for a predefined amount of time after the displaying the guidelines (52a, 52b) for avoiding the potential collision between the first and second monitored flight vehicles (50, 60).

11. A system for controlling the operations of flight vehicles, comprising:
a processor (1100); and
a memory (1400) storing instructions;
wherein when executed by the processor (1100), the instructions instruct the processor (1100) to perform operations of: assigning to each of monitored flight vehicles (10, 20, 30, 40) virtual flight vehicles to be displayed around monitored flight vehicles as neighboring virtual flight vehicles (10a, 20a, 30a, 40a); inputting operation information of the monitored flight vehicles (10, 20, 30, 40) to a collision detection model; and if information indicating that a collision has occurred between neighboring virtual flight vehicles (50a-50f) of a first monitored flight vehicle (50) and neighboring virtual flight vehicles (60a-60f) of a second monitored flight vehicle (60) is output from the collision detection model, outputting a collision warning message, wherein
the collision detection model is a model that utilizes operation information of the neighboring virtual flight vehicles (10a, 20a, 30a, 40a), which is obtained by applying the operation information of the monitored flight vehicles (10, 20, 30, 40) to their respective neighboring virtual flight vehicles (10a, 20a, 30a, 40a), to determine and output the occurrence of a collision between the neighboring virtual flight vehicles (50a-50f, 60a-60f) of the first and second monitored flight vehicles (50, 60),
**characterized in that**
the operation of assigning to each of the monitored flight vehicles (10, 20, 30, 40) comprises providing a first control screen (100a) that displays the operation information of the monitored flight vehicles (10, 20, 30, 40) and providing a second control screen (200a) that displays operation information of neighboring virtual flight vehicles (60a-60f) of the second monitored flight vehicle (60),
wherein neighbouring virtual flight vehicles are displayed using Augmented Reality (AR) and whereby an image of the second monitored flight vehicle is obtained and displayed using a camera installed in the first monitored flight vehicle.

12. The system of claim 11, wherein the neighboring virtual flight vehicles (10a, 20a, 30a, 40a) have the same shape and specifications as their respective monitored flight vehicles (10, 20, 30, 40).

13. The system of claim 11, wherein the operation of outputting the collision warning message comprises predicting a potential collision between the first and second monitored flight vehicles (50, 60), displaying context information of the potential collision on the first control screen (100a) if the potential collision is predicted, and displaying details on how to control the first and second monitored flight vehicles (50, 60) to avoid the potential collision on the first control screen (100a).

14. The system of claim 13, wherein the operation of predicting the potential collision between the first and second monitored flight vehicles (50, 60) comprises predicting that a collision between the first and second monitored flight vehicles (50, 60) will occur when a collision between one of the neighboring virtual flight vehicles (50a-50f) of the first monitored flight vehicle (50) and one of the neighboring virtual flight vehicles (60a-60f) of the second monitored flight vehicle (60) occurs.

## Patentansprüche

1. Verfahren und Einrichtung zur Steuerung von Operationen von Luftfahrzeugen, das Folgendes umfasst:
Zuordnen, zu jedem von überwachten Luftfahrzeugen (10, 20, 30, 40), von virtuellen Luftfahrzeugen, die rund um überwachte Luftfahrzeuge als benachbarte virtuelle Luftfahrzeuge (10a, 20a, 30a, 40a) angezeigt werden sollen;
Eingeben von Betriebsinformationen der überwachten Luftfahrzeuge (10, 20, 30, 40) in ein Kollisionsdetektionsmodell; und
wenn die Informationen anzeigen, dass vom Kollisionsdetektionsmodell ausgegeben wird, dass eine Kollision (8a) zwischen benachbarten virtuellen Luftfahrzeugen (50a-50f) eines ersten überwachten Luftfahrzeugs (50) und benachbarten virtuellen Luftfahrzeugen (60a-60f) eines zweiten überwachten Luftfahrzeugs (60) aufgetreten ist, Ausgeben einer Kollisionswarnmeldung,
wobei das Kollisionsdetektionsmodell ein Modell ist, das Betriebsinformationen der benachbarten virtuellen Luftfahrzeuge (10a, 20a, 30a, 40a), die durch Anwenden der Betriebsinformationen der überwachten Luftfahrzeuge (10, 20, 30, 40) auf ihre entsprechenden benachbarten virtuellen Luftfahrzeuge (10a, 20a, 30a, 40a) erhalten werden, nutzt, um das Auftreten einer Kollision (8a) zwischen den benachbarten virtuellen Luftfahrzeugen (50a-50f, 60a-60f) des ersten und des zweiten überwachten Luftfahrzeugs (50, 60) zu bestimmen und auszugeben,
**dadurch gekennzeichnet, dass**
das Zuordnen zu jedem der überwachten Luftfahrzeuge (10, 20, 30, 40) Folgendes umfasst: Bereitstellen eines ersten Steuerbildschirms (100a), der die Betriebsinformationen der überwachten Luftfahrzeuge (10, 20, 30, 40) anzeigt, und Bereitstellen eines zweiten Steuerbildschirms (200a), der Betriebsinformationen von benachbarten virtuellen Luftfahrzeugen (60a-60f) des zweiten überwachten Luftfahrzeugs (60) anzeigt,
wobei benachbarte virtuelle Luftfahrzeuge unter Verwendung von Erweiterter Realität (Augmented Reality, AR) angezeigt werden und wobei ein Bild des zweiten überwachten Luftfahrzeugs unter Verwendung einer im ersten überwachten Luftfahrzeug installierten Kamera erhalten und angezeigt wird.

2. Verfahren nach Anspruch 1, wobei die benachbarten virtuellen Luftfahrzeuge (10a, 20a, 30a, 40a) die gleiche Form und die gleichen Spezifikationen aufweisen wie ihre entsprechenden überwachten Luftfahrzeuge (10, 20, 30, 40).

3. Verfahren nach Anspruch 1, wobei das Ausgeben der Kollisionswarnmeldung Folgendes umfasst: Vorhersagen einer potenziellen Kollision zwischen dem ersten und dem zweiten überwachten Luftfahrzeug (50, 60), Anzeigen von Kontextinformationen der potenziellen Kollision auf dem ersten Steuerbildschirm (100a), wenn die potenzielle Kollision vorhergesagt wird, und Anzeigen von Details dazu, wie das erste und das zweite überwachte Luftfahrzeug (50, 60) zu steuern sind, um die potenzielle Kollision auf dem ersten Steuerbildschirm (100a) zu verhindern.

4. Verfahren nach Anspruch 3, wobei das Vorhersagen der potenziellen Kollision zwischen dem ersten und dem zweiten überwachten Luftfahrzeug (50, 60) Vorhersagen umfasst, dass eine Kollision zwischen dem ersten und dem zweiten überwachten Luftfahrzeug (50, 60) auftreten wird, wenn eine Kollision (8a) zwischen einem der benachbarten virtuellen Luftfahrzeuge (50a-50f) des ersten überwachten Luftfahrzeugs (50) und einem der benachbarten virtuellen Luftfahrzeuge (60a-60f) des zweiten überwachten Luftfahrzeugs (60) auftritt.

5. Verfahren nach Anspruch 3, wobei das Anzeigen der Kontextinformationen der potenziellen Kollision auf dem ersten Steuerbildschirm (100a) Folgendes umfasst: Anzeigen einer Kollisionswarnmeldung für die potenzielle Kollision, von Informationen der überwachten Luftfahrzeuge (10, 20, 30, 40) in Verbindung mit der potenziellen Kollision und Ortsinformationen der potenziellen Kollision auf dem ersten Steuerbildschirm (100a) und Anzeigen von Betriebsinformationen der überwachten Luftfahrzeuge (10, 20, 30, 40) in Verbindung mit der potenziellen Kollision und von Betriebsinformationen ihrer entsprechenden benachbarten virtuellen Luftfahrzeuge (10a, 20a, 30a, 40a) auf dem ersten Steuerbildschirm (100a) in Reaktion auf eine vordefinierte Benutzereingabe für den ersten Steuerbildschirm (100a).

6. Verfahren nach Anspruch 5, wobei das Anzeigen des Betriebs der überwachten Luftfahrzeuge (10, 20, 30, 40) in Verbindung mit der potenziellen Kollision und der Betriebsinformationen ihrer entsprechenden benachbarten virtuellen Luftfahrzeuge (10a, 20a, 30a, 40a) Folgendes umfasst: Anzeigen des ersten und des zweiten überwachten Luftfahrzeugs (50, 60) in einer von den anderen überwachten Luftfahrzeugen (10, 20, 30, 40) visuell unterscheidbaren Weise und Anzeigen von Betriebsinformationen des ersten überwachten Luftfahrzeugs (50) bzw. von Betrieb des zweiten überwachten Luftfahrzeugs (60) rund um das erste und das zweite überwachte Luftfahrzeug (50, 60).

7. Verfahren nach Anspruch 3, wobei das Anzeigen der Details dazu, wie das erste und das zweite überwachte Luftfahrzeug (50, 60) zu steuern sind, Folgendes umfasst: Anzeigen der benachbarten virtuellen Luftfahrzeuge (50a-50f) des ersten überwachten Luftfahrzeugs (50) und der benachbarten virtuellen Luftfahrzeuge (60a-60f) des zweiten überwachten Luftfahrzeugs (60) und Anzeigen von Richtlinien (52a, 52b) zur Vermeidung der potenziellen Kollision zwischen dem ersten und dem zweiten überwachten Luftfahrzeug (50, 60).

8. Verfahren nach Anspruch 7, wobei das Anzeigen der Richtlinien (52a, 52b) zur Vermeidung der potenziellen Kollision zwischen dem ersten und dem zweiten überwachten Luftfahrzeug (50, 60) Anzeigen von Richtlinien (52a, 52b) zum Abweichen des ersten überwachten Luftfahrzeugs (50) von einem vordefinierten Flugpfad des ersten überwachten Luftfahrzeugs (50) umfasst.

9. Verfahren nach Anspruch 7, wobei das Anzeigen der Richtlinien (52a, 52b) zur Vermeidung der potenziellen Kollision zwischen dem ersten und dem zweiten überwachten Luftfahrzeug (50, 60) Anzeigen von Richtlinien (52a, 52b) zum Abweichen des zweiten überwachten Luftfahrzeugs (60) von einem vordefinierten Flugpfad des zweiten überwachten Luftfahrzeugs (60) umfasst.

10. Verfahren nach Anspruch 7, wobei das Anzeigen der Richtlinien (52a, 52b) zur Vermeidung der potenziellen Kollision zwischen dem ersten und dem zweiten überwachten Luftfahrzeug (50, 60) ferner Vermeiden der potenziellen Kollision zwischen dem ersten und dem zweiten überwachten Luftfahrzeug (50, 60) durch automatisches Auswählen einer der Richtlinien (52a, 52b) umfasst, wenn eine vordefinierte Zeitdauer nach dem Anzeigen der Richtlinien (52a, 52b) zur Vermeidung der potenziellen Kollision zwischen dem ersten und dem zweiten überwachten Luftfahrzeug (50, 60) keine Benutzereingabe empfangen wird.

11. System zur Steuerung der Operationen von Luftfahrzeugen, das Folgendes umfasst:
einen Prozessor (1100); und
einen Speicher (1400), der Befehle speichert;
wobei die Anweisungen, wenn sie durch den Prozessor (1100) ausgeführt werden, den Prozessor (1100) anweisen, die folgenden Operationen durchzuführen: Zuordnen, zu jedem von überwachten Luftfahrzeugen (10, 20, 30, 40), von virtuellen Luftfahrzeugen, die rund um überwachte Luftfahrzeuge als benachbarte virtuelle Luftfahrzeuge (10a, 20a, 30a, 40a) anzuzeigen sind; Eingeben von Betriebsinformationen der überwachten Luftfahrzeuge (10, 20, 30, 40) in ein Kollisionsdetektionsmodell; und wenn Informationen anzeigen, dass das Kollisionsdetektionsmodell ausgibt, dass eine Kollision zwischen benachbarten virtuellen Luftfahrzeugen (50a-50f) eines ersten überwachten Luftfahrzeugs (50) und benachbarten virtuellen Luftfahrzeugen (60a-60f) eines zweiten überwachten Luftfahrzeugs (60) auftritt, Ausgeben der Kollisionswarnmeldung,
wobei das Kollisionsdetektionsmodell ein Modell ist, das Betriebsinformationen der benachbarten virtuellen Luftfahrzeuge (10a, 20a, 30a, 40a), die durch Anwenden der Betriebsinformationen der überwachten Luftfahrzeuge (10, 20, 30, 40) auf ihre entsprechenden benachbarten virtuellen Luftfahrzeuge (10a, 20a, 30a, 40a) erhalten werden, genutzt wird, um das Auftreten einer Kollision zwischen den benachbarten virtuellen Luftfahrzeugen (50a-50f, 60a-60f) des ersten und des zweiten überwachten Luftfahrzeugs (50, 60) zu bestimmen und auszugeben,
**dadurch gekennzeichnet, dass**
die Operation des Zuordnens zu jedem der überwachten Luftfahrzeuge (10, 20, 30, 40) Folgendes umfasst: Bereitstellen eines ersten Steuerbildschirms (100a), der die Betriebsinformationen der überwachten Luftfahrzeuge (10, 20, 30, 40) anzeigt, und Bereitstellen eines zweiten Steuerbildschirms (200a), der Betriebsinformationen von benachbarten virtuellen Luftfahrzeugen (60a-60f) des zweiten überwachten Luftfahrzeugs (60) anzeigt,
wobei benachbarte virtuelle Luftfahrzeuge unter Verwendung von Erweiterter Realität (Augmented Reality, AR) angezeigt werden und wobei ein Bild des zweiten überwachten Luftfahrzeugs unter Verwendung einer im ersten überwachten Luftfahrzeug installierten Kamera erhalten und angezeigt wird.

12. System nach Anspruch 11, wobei die benachbarten virtuellen Luftfahrzeuge (10a, 20a, 30a, 40a) die gleiche Form und die gleichen Spezifikationen aufweisen wie ihre entsprechenden überwachten Luftfahrzeuge (10, 20, 30, 40).

13. System nach Anspruch 11, wobei die Operation des Ausgebens der Kollisionswarnmeldung Folgendes umfasst: Vorhersagen einer potenziellen Kollision zwischen dem ersten und dem zweiten überwachten Luftfahrzeug (50, 60), Anzeigen von Kontextinformationen der potenziellen Kollision auf dem ersten Steuerbildschirm (100a), wenn die potenzielle Kollision vorhergesagt wird, und Anzeigen von Details dazu, wie das erste und das zweite überwachte Luftfahrzeug (50, 60) zu steuern sind, um die potenzielle Kollision auf dem ersten Steuerbildschirm (100a) zu verhindern.

14. System nach Anspruch 13, wobei das Vorhersagen der potenziellen Kollision zwischen dem ersten und dem zweiten überwachten Luftfahrzeug (50, 60) Vorhersagen umfasst, dass eine Kollision zwischen dem ersten und dem zweiten überwachten Luftfahrzeug (50, 60) auftreten wird, wenn eine Kollision zwischen einem der benachbarten virtuellen Luftfahrzeuge (50a-50f) des ersten überwachten Luftfahrzeugs (50) und einem der benachbarten virtuellen Luftfahrzeuge (60a-60f) des zweiten überwachten Luftfahrzeugs (60) auftritt.

## Revendications

1. Procédé de commande des opérations d'engins volants, réalisé par un dispositif informatique, comprenant :
l'affectation, à chacun d'entre des engins volants surveillés (10, 20, 30, 40), d'engins volants virtuels à afficher autour d'engins volants surveillés en tant qu'engins volants virtuels voisins (10a, 20a, 30a, 40a) ; l'entrée d'informations opérationnelles des engins volants surveillés (10, 20, 30, 40) dans un modèle de détection de collision ; et
si le modèle de détection de collision génère des informations indiquant qu'une collision (8a) est survenue entre des engins volants virtuels voisins (50a-50f) d'un premier engin volant surveillé (50) et des engins volants virtuels voisins (60a-60f) d'un deuxième engin volant surveillé (60), la génération d'un message d'avertissement de collision,
le modèle de détection de collision étant un modèle qui utilise des informations opérationnelles des engins volants virtuels voisins (10a, 20a, 30a, 40a), obtenues en appliquant les informations opérationnelles des engins volants surveillés (10, 20, 30, 40) à leurs engins volants virtuels voisins (10a, 20a, 30a, 40a) respectifs, afin de déterminer et générer la survenue d'une collision (8a) entre les engins volants virtuels voisins (50a-50f, 60a-60f) du premier et du deuxième engin volant surveillé (50, 60),
**caractérisé en ce que**
l'affectation à chacun d'entre les engins volants surveillés (10, 20, 30, 40) comprend la fourniture d'un premier écran de commande (100a) qui affiche les informations opérationnelles des engins volants surveillés (10, 20, 30, 40) et la fourniture d'un deuxième écran de commande (200a) qui affiche des informations opérationnelles d'engins volants virtuels voisins (60a-60f) du deuxième engin volant surveillé (60),
les engins volants virtuels voisins étant affichés au moyen de la réalité augmentée (AR), et une image du deuxième engin volant surveillé étant obtenue et affichée au moyen d'une caméra installée dans le premier engin volant surveillé.

2. Procédé selon la revendication 1, dans lequel les engins volants virtuels voisins (10a, 20a, 30a, 40a) présentent la même forme et les mêmes spécifications que leurs engins volants surveillés (10, 20, 30, 40) respectifs.

3. Procédé selon la revendication 1, dans lequel la génération du message d'avertissement de collision comprend la prédiction d'une collision potentielle entre le premier et le deuxième engin volant surveillé (50, 60), l'affichage, sur le premier écran de commande (100a), d'informations contextuelles relatives à la collision potentielle si la collision potentielle est prédite, et l'affichage, sur le premier écran de commande (100a), d'indications sur la façon de commander le premier et le deuxième engin volant surveillé (50, 60) afin d'éviter la collision potentielle.

4. Procédé selon la revendication 3, dans lequel la prédiction de la collision potentielle entre le premier et le deuxième engin volant surveillé (50, 60) comprend la prédiction qu'une collision surviendra entre le premier et le deuxième engin volant surveillé (50, 60) lorsqu'une collision (8a) survient entre l'un des engins volants virtuels voisins (50a-50f) du premier engin volant surveillé (50) et l'un des engins volants virtuels voisins (60a-60f) du deuxième engin volant surveillé (60).

5. Procédé selon la revendication 3, dans lequel l'affichage, sur le premier écran de commande (100a), des informations contextuelles relatives à la collision potentielle comprend l'affichage, sur le premier écran de commande (100a), d'un message d'avertissement de collision pour la collision potentielle, d'informations d'engins volants surveillés (10, 20, 30, 40) associés à la collision potentielle, et d'informations relatives à la localisation de la collision potentielle, et l'affichage, sur le premier écran de commande (100a), d'informations opérationnelles des engins volants surveillés (10, 20, 30, 40) associées à la collision potentielle et d'informations opérationnelles de leurs engins volants virtuels voisins (10a, 20a, 30a, 40a) respectifs en réponse à une entrée utilisateur prédéfinie pour le premier écran de commande (100a).

6. Procédé selon la revendication 5, dans lequel l'affichage de l'opération des engins volants surveillés (10, 20, 30, 40) associés à la collision potentielle et d'informations opérationnelles de leurs engins volants virtuels voisins (10a, 20a, 30a, 40a) respectifs comprend l'affichage du premier et du deuxième engin volant surveillé (50, 60) d'une manière visuellement différenciable des autres engins volants surveillés (10, 20, 30, 40) et l'affichage, respectivement autour du premier et du deuxième engin volant surveillé (50, 60), d'informations opérationnelles du premier engin volant surveillé (50) et de l'opération du deuxième engin volant surveillé (60).

7. Procédé selon la revendication 3, dans lequel l'affichage des indications sur la façon de commander le premier et le deuxième engin volant surveillé (50, 60) comprend l'affichage des engins volants virtuels voisins (50a-50f) du premier engin volant surveillé (50) et des engins volants virtuels voisins (60a-60f) du deuxième engin volant surveillé (60) et l'affichage de directives (52a, 52b) destinées à éviter la collision potentielle entre le premier et le deuxième engin volant surveillé (50, 60).

8. Procédé selon la revendication 7, dans lequel l'affichage des directives (52a, 52b) destinées à éviter la collision potentielle entre le premier et le deuxième engin volant surveillé (50, 60) comprend l'affichage de directives (52a, 52b) destinées à dévier le premier engin volant surveillé (50) d'une trajectoire de vol prédéfinie du premier engin volant surveillé (50).

9. Procédé selon la revendication 7, dans lequel l'affichage des directives (52a, 52b) destinées à éviter la collision potentielle entre le premier et le deuxième engin volant surveillé (50, 60) comprend l'affichage de directives (52a, 52b) destinées à dévier le deuxième engin volant surveillé (60) d'une trajectoire de vol prédéfinie du deuxième engin volant surveillé (60).

10. Procédé selon la revendication 7, dans lequel l'affichage des directives (52a, 52b) destinées à éviter la collision potentielle entre le premier et le deuxième engin volant surveillé (50, 60) comprend en outre l'évitement de la collision potentielle entre le premier et le deuxième engin volant surveillé (50, 60) par sélection automatique de l'une des directives (52a, 52b) si aucune entrée d'utilisateur n'est reçue dans un laps de temps prédéfini suivant l'affichage des directives (52a, 52b) destinées à éviter la collision potentielle entre le premier et le deuxième engin volant surveillé (50, 60).

11. Système de commande des opérations d'engins volants, comprenant :
un processeur (1100) ; et
une mémoire (1400) stockant des instructions ;
les instructions, lorsqu'elles sont exécutées par le processeur (1100), amenant le processeur (1100) à réaliser les opérations suivantes : l'affectation, à chacun d'entre des engins volants surveillés (10, 20, 30, 40), d'engins volants virtuels à afficher autour d'engins volants surveillés en tant qu'engins volants virtuels voisins (10a, 20a, 30a, 40a) ; l'entrée d'informations opérationnelles des engins volants surveillés (10, 20, 30, 40) dans un modèle de détection de collision ; et, si le modèle de détection de collision génère des informations indiquant qu'une collision s'est produite entre des engins volants virtuels voisins (50a-50f) d'un premier engin volant surveillé (50) et des engins volants virtuels voisins (60a-60f) d'un deuxième engin volant surveillé (60), la génération d'un message d'avertissement de collision,
le modèle de détection de collision étant un modèle qui utilise des informations opérationnelles des engins volants virtuels voisins (10a, 20a, 30a, 40a), obtenues en appliquant les informations opérationnelles des engins volants surveillés (10, 20, 30, 40) à leurs engins volants virtuels voisins (10a, 20a, 30a, 40a) respectifs, afin de déterminer et générer la survenue d'une collision entre les engins volants virtuels voisins (50a-50f, 60a-60f) du premier et du deuxième engin volant surveillé (50, 60),
**caractérisé en ce que**
l'opération d'affectation à chacun d'entre les engins volants surveillés (10, 20, 30, 40) comprend la fourniture d'un premier écran de commande (100a) qui affiche les informations opérationnelles des engins volants surveillés (10, 20, 30, 40) et la fourniture d'un deuxième écran de commande (200a) qui affiche des informations opérationnelles d'engins volants virtuels voisins (60a-60f) du deuxième engin volant surveillé (60),
les engins volants virtuels voisins étant affichés au moyen de la réalité augmentée (AR), et une image du deuxième engin volant surveillé étant obtenue et affichée au moyen d'une caméra installée dans le premier engin volant surveillé.

12. Système selon la revendication 11, dans lequel les engins volants virtuels voisins (10a, 20a, 30a, 40a) présentent la même forme et les mêmes spécifications que leurs engins volants surveillés (10, 20, 30, 40) respectifs.

13. Système selon la revendication 11, dans lequel l'opération de génération du message d'avertissement de collision comprend la prédiction d'une collision potentielle entre le premier et le deuxième engin volant surveillé (50, 60), l'affichage, sur le premier écran de commande (100a), d'informations contextuelles relatives à la collision potentielle si la collision potentielle est prédite, et l'affichage, sur le premier écran de commande (100a), d'indications sur la façon de commander le premier et le deuxième engin volant surveillé (50, 60) afin d'éviter la collision potentielle.

14. Système selon la revendication 13, dans lequel l'opération de prédiction de la collision potentielle entre le premier et le deuxième engin volant surveillé (50, 60) comprend la prédiction qu'une collision surviendra entre le premier et le deuxième engin volant surveillé (50, 60) lorsqu'une collision survient entre l'un des engins volants virtuels voisins (50a-50f) du premier engin volant surveillé (50) et l'un des engins volants virtuels voisins (60a-60f) du deuxième engin volant surveillé (60).
